Europäisches Patentamt

European Patent Office

Office européen des brevets

(11) Veröffentlichungsnummer: **0 332 839**

**A1**

## (12) EUROPÄISCHE PATENTANMELDUNG

(21) Anmeldenummer: 89102056.2

(22) Anmeldetag: 07.02.89

(51) Int. Cl.⁴: **B25B 23/04**

(30) Priorität: 17.03.88 DE 3808889

(43) Veröffentlichungstag der Anmeldung:
20.09.89 Patentblatt 89/38

(84) Benannte Vertragsstaaten:
AT BE CH ES FR GB IT LI NL SE

(71) Anmelder: EXPERT Maschinenbau GmbH
Seehofstrasse 56-58
D-6143 Lorsch(DE)

(72) Erfinder: Schmidt, Heinz
Fliederweg 4
D-6141 Einhausen(DE)

(74) Vertreter: Helber, Friedrich G., Dipl.-Ing. et al
Giesser Weg 47
D-6144 Zwingenberg(DE)

(54) **Automatisch beschickbarer Schrauber.**

(57) Automatisch beschickbarer Schrauber (10) für Kopfschrauben, dem die Schrauben mit dem Schaft vorausweisend über eine pneumatische Förderleitung (50) von einem Schraubenvorrat aus einzeln zugeführt werden. Der Schrauber weist eine am freien Ende einer motorisch drehantreibbaren Welle (20) angeordnete Schraubenkopf-Aufnahme (22) auf, welche zwischen zwei Endstellungen entlang der Wellen-Drehachse verschiebbar ist, wobei die Aufnahme (22) in der vorgeschobenen Endstellung eine achsparallel ausgerichtete Schraubenhalterung (32) für die zugeführten Schrauben durchgreift, welche sie in der zurückgezogenen Endstellung vollständig freigibt, so daß die Schraubenhalterung (32) dann in eine zur achsparallel ausgerichteten Stellung versetzte Stellung bewegbar ist, in welcher sie passend am Ende der pneumatischen Förderleitung (50) angeschlossen ist. Nach Zufuhr einer Schraube ist die Schraubenhalterung (32) dann in die zur Drehachse ausgerichtete Stellung zurückbewegbar, so daß die Schraubenkopf-Aufnahme (22) dann wieder unter Ergreifen des Schraubenkopfs in die vorgeschobene Endstellung bewegbar ist.

FIG.1

## Automatisch beschickbarer Schrauber

Die Erfindung betrifft einen Schrauber zum Eindrehen von Kopfschrauben in Gewindebohrungen in auf einer Montagestrecke zugeführten Werkstücken, dem die einzudrehenden Schrauben mit dem Schaft vorausweisend über eine pneumatische Förderleitung von einem Schraubenvorrat aus einzeln zugeführt werden, mit einer am freien Ende einer motorisch drehantreibbaren Welle angeordneten Schraubenkopf-Aufnahme, welche zwischen zwei Endstellungen entlang der Wellen-Drehachse verschiebbar ist, wobei die Aufnahme in der vorgeschobenen Endstellung eine achsparallel ausgerichtete Schraubenhalterung für die zugeführten Schrauben durchgreift, welche sie in der zurückgezogenen Endstellung vollständig freigibt, so daß die Schraubenhalterung dann in eine zur achsparallel ausgerichteten Stellung versetzte Stellung bewegbar ist, in welcher sie passend am Ende der pneumatischen Förderleitung angeschlossen ist, worauf sie nach Zufuhr einer Schraube in die zur Drehachse ausgerichtete Stellung zurückbewegbar ist, so daß die Schraubenkopf-Aufnahme dann wieder unter Ergreifen des Schraubenkopfs in die vorgeschobene Endstellung bewegbar ist.

Derartige motorisch angetriebene Schraubwerkzeuge sind dann erforderlich, wenn in der industriellen Serienfertigung Schrauben in Gewindebohrungen von taktweise auf der Montagestrecke zugeführten Werkstücken eingeschraubt werden müssen. Die Schrauber werden hierfür beispielsweise an den Auslegern von Industrierobotern - oder anderen Handhabungseinrichtungen - angeordnet, welche den Schrauber mit der in der Schraubenkopf-Aufnahme gehaltenen Schraube zur jeweiligen Gewindebohrung führen, wo dann der Einschraubvorgang erfolgt. Die bekannten, automatisch beschickbaren Schrauber dieser Art sind kompliziert aufgebaute und dementsprechend teure Arbeitsgeräte, bei welchen es infolge des komplexen Aufbaus auch zu funktionsstörungen kommen kann.

Der Erfindung liegt demgegenüber die Aufgabe zugrunde, einen automatisch mit Schrauben beschickbaren Schrauber zu schaffen, der einfach aufgebaut und somit kostengünstig herstellbar ist, wobei die Funktionssicherheit wesentlich verbessert werden soll.

Ausgehend von einem Schrauber der eingangs erwähnten Art wird diese Aufgabe erfindungsgemäß dadurch gelöst, daß die Schraubenhalterung zwischen zwei gegenüberliegenden Halterungsplatten aufgenommen und durch eine zwischen ihr und den Halterungsplatten ausgebildete Kulissenführung zwischen der zur Schraubenkopf-Aufnahme fluchtend ausgerichteten Stellung einerseits und der am Ende der Förderleitung angeschlossenen Stellung andererseits bewegbar geführt ist, und daß an der Schraubenhalterung das eine Ende wenigstens einer Koppelungsstange angeschlossen ist, welche andererseits an einem die Welle mit der Schraubenkopf-Aufnahme drehbar lagernden und längsverschieblich zwischen den Halterungsplatten führenden Lagerschlitten angeschlossen ist, an welchem die die Schraubenkopf-Aufnahme zwischen den beiden Endstellungen verschiebende Vorschub-Einheit angeschlossen ist. Die mechanische Koppelung des Lagerschlittens mit der ihrerseits durch eine Kulissenführung zwangsläufig geführten Schraubenhalterung ermöglicht es, daß eine einzige Vorschub-Einheit sowohl für das Vorschieben und Zurückziehen der motorisch drehangetriebenen Schraubenkopf-Aufnahme als auch für die Bewegung der Schraubenhalterung Verwendung findet. Für die Beschickung der Schraubenhalterung mit jeweils einer Schraube in der an der Förderleitung angeschlossenen Stellung und die anschließende Überführung der Schraubenhalterung in die ausgerichtete Stellung zu Schraubenkopf-Aufnahmen und schließlich den Vorschub der Schraubenkopf-Aufnahme derart, daß der Schraubenkopf ergriffen wird und die Schraube dann in die zugehörige Gewindebohrung eingeschraubt werden kann, genügt es also, diese eine Vorschub-Einheit anzusteuern, was erheblich einfacher und auch sicherer ist, als wenn die einzelnen Baugruppen in der korrekten zeitlichen Reihenfolge gesondert angesteuert werden müßten. Die mechanisch zwangsläufige Koppelung verbürgt dann auch die angestrebte Funktionssicherheit.

Die Kulissenführung wird dabei in bevorzugter Weiterbildung der Erfindung von einer Kulissennut in wenigstens einer der Halterungsplatten und zwei mit Abstand voneinander von der Schraubenhalterung in die Kulissennut vorstehenden Kulissenbolzen gebildet.

Die Kulissennut(en) weist bzw. weisen dabei zweckmäßig einen der die Schraubenhalterung durchgreifenden vorgeschobenen Endstellung der Schraubenkopf-Aufnahme zugeordneten, zur Wellen-Drehachse parallelen ersten Nutabschnitt und eine hieran anschließenden, der zurückgezogenen Endstellung zugeordneten, schräg zur Wellen-Drehachse verlaufenden zweiten Nutabschitt auf. Solange sich die beiden, in die Kulissennut vorstehenden Kulissenbolzen im gleichen Nutabschnitt befindet, bestimmt die Richtung dieses Nutabschnitts die Stellung der Schraubenhalterung. Die Änderung der Lage der Schraubenhalterung erfolgt in dem Augenblick, in welchem einer der Nutbolzen von dem einen Nutabschnitt in den anderen übertritt und ist dann beendet, wenn der zweite Bolzen ebenfalls vollständig in den zweiten Nutabschnitt übergetreten ist.

Die Schraubenhalterung weist zweckmäßig einen mit der Kulissenführung versehenen Halterungsschlitten auf, in welchem ein Halterungskopf drehbar gelagert ist, der mit entgegen der Vorspannung einer Feder in die den Kopf einer über die Förderleitung zugeführten Schraube haltende Stellung gespannten Halterungsbacken versehen ist, welche beim Vorschieben der Schraubenkopf-Aufnahme entgegen ihrer Federvorspannung radial auseinanderdrängbar sind. Durch die drehbare Lagerung des Halterungskopfs mit den an ihm vorgesehenen Halterungsbacken wird erreicht, daß beim Vorschie ben der drehangetriebenen Schraubenkopf-Aufnahme in den und anschließend durch den Halterungskopf hindurch letzterer in Drehrichtung mitgenommen wird so daß, die Halterungsbacken also nicht auf der die Schraubenkopf-Aufnahme antreibenden Welle schleifen und demzufolge auch nicht abgenutzt werden.

Das eine Ende der Koppelungsstange(n) ist in zweckmäßiger Weiterbildung der Erfindung verschwenkbar an der Schraubenhalterung und das jeweils anderer Ende verschwenkbar und zusätzlich zumindest um die zum vollständigen Zurückziehen der Schraubenkopf-Aufnahme aus der Schraubenhalterung erforderliche Wegstrecke relativ zum Lagerschlitten längsverschieblich am Lagerschlitten angeschlossen. Bei einer Betätigung der Vorschub-Einheit in Rückzugrichtung der Schraubenkopf-Aufnahme wird die Bewegung des Lagerschlittens zunächst solange noch nicht auf die Schraubenhalterung übertragen, wie die Koppelungsstange(n) sich noch relativ zum Lagerschlitten in Längsrichtung verschieben kann. Erst dann, wenn dieser Längsverschiebungsweg erschöpft ist, was - voraussetzungsgemäß - gerade dann der Fall ist, wenn die Schraubenkopf-Aufnahme aus der Schraubenhaltrung zurückgezogen ist, wird die Lagerschlitten-Bewegung über die Koppelungsstange(n) auf die Schraubenhalterung übertragen und diese - zwangsläufig durch die Kulissenführung geführt - in die an der Förderleitung für die Zufuhr der Schraubenbolzen angeschlossene Stellung verschoben.

Von Vorteil ist dabei eine Ausgestaltung, bei welcher ein in der ganz vorgeschobenen Endstellung und zumindest während eines ersten Teils des Wegs des Lagerschlittens aus der ganz vorgeschobenen in die ganz zurückgezogene Endstellung am Lagerschlitten einerseits und am Halterungsschlitten andererseits angreifende, unter Druckvorspannung stehende und die Schlitten auseinanderzudrängen suchende Vorspann-Einrichtung vorgesehen ist.

Der Anschluß der Koppelungsstange(n) am Lagerschlitten erfolgt in der Praxis zweckmäßig dadurch, daß in dem am Lagerschlitten angeschlossenen Endbereich der Koppelungsstange(n) jeweils ein Längsschlitz vorgesehen ist, in welche(n) jeweils ein vom Lagerschlitten vortretender Bolzen eingreift bzw. eingreifen. Der Längsschlitz braucht dabei die Koppelungsstange(n) nicht voll zu durchsetzen, sondern er kann auch als nur lagerschlittenseitig offen mündende Längsnut ausgebildet sein.

Die Vorspann-Einrichtung weist in der Praxis zweckmäßig ein von langgestreckten, in Längsrichtung verschieblich ineinander geführten und durch eine Feder in eine auseinandergeschobene Stellung vorgespannten Bauelementen gebildetes Teleskopelement auf, wobei das eine Ende des Teleskopelements bzw. der Teleskopelemente am Halterungsschlitten abgestützt ist bzw. sind, während das jeweils andere, demgegenüber in die auseinandergezogene Stellung vorgespannte Ende des Teleskopelements zusätzlich zum Lagerschlitten an einem Querhaupt abgestützt sein kann, welches um eine begrenzte Wegstrecke längsverschieblich zwischen den Koppelungsstangen angeordnet ist. Die Beschränkung der Längsverschieblichkeit des Querhaupts stellt eine Sicherung gegen ein Auseinanderschieben der Teleskopelemente soweit, daß sie sich trennen, dar. Die begrenzte Längsverschieblichkeit zwischen dem Querhaupt und der Koppelungsstange bzw. den Koppelungsstangen kann dabei wiederum dadurch erreicht werden, daß in wenigstens einer der Koppelungsstangen ein Längsschlitz vorgesehen ist, in welche ein von der zugewandten Fläche des Querhaupts vortretender Bolzen eingreift, wobei die Länge des Längsschlitzes gleich dem maximal zulässigen Hub des Teleskopelements bemessen ist.

Der bzw. die vom Querhaupt vortretende(n) Bolzen durchsetzen den Längsschlitz in der jeweils zugeordneten Koppelungsstange dabei zweckmäßig vollständig und greifen dann noch in einen etwa doppelt so langen bzw. etwas längeren Längsschlitz in der benachbarten Halterungsplatte ein. Dadurch wird erreicht, daß das Teleskopelement bzw. die Teleskopelemente während des letzten Teils der Rückzugsbewegung des Lagerschlittens wieder gespannt werden, weil der äußerste Teil des bzw. der vom Querhaupt vortretenden Bolzen am Ende des Längsschlitzes in der jeweils zugeordneten Halterungsplatte festgehalten wird.

Die Vorschub-Einheit ist zweckmäßig eine am Lagerschlitten angeschlossene und direkt oder indirekt an wenigstens einer der Halterungsplatten andererseits abgestützte, mit einem Druckmedium beaufschlagbare Kolben-Zylinder-Einheit.

Dabei empfiehlt es sich, eine pneumatische Kolben-Zylinder-Einheit vorzusehen, nachdem Druckluft für die Förderung der Schrauben aus dem Schraubenvorrat zum Schrauben ja ohnehin zur Verfügung stehen muß.

Die Erfindung ist in der folgenden Beschreibung eines Ausführungsbeispiels in Verbindung mit der Zeichnung näher erläutert, und zwar zeigt:

Fig. 1 eine Seitenansicht eines in der erfindungsgemäßen Weise ausgebildeten Schraubers mit in die Arbeitsstellung, d.h. durch die Schraubenhalterung hindurch vorgeschobener Schraubenkopf-Aufnahme;

Fig. 2 eine Seitenansicht des unteren Teils des in Figur 1 gezeigten Schraubers mit zurückgezogener Schraubenkopf-Aufnahme und in die an der Förderleitung angeschlossene Stellung versetzter Schraubenhalterung;

Fig. 3 eine Schnittansicht, gesehen in Richtung der Pfeile 3-3 in Figur 1;

Fig. 4 eine Schnittansicht, gesehen in Richtung der Pfeile 4-4 in Figur 1;

Fig. 5 eine Schnittansicht, gesehen in Richtung der Pfeile 5-5 in Figur 2;

Fig. 6 eine Ansicht auf den Anschluß der Förderleitung am Schrauber, gesehen in Richtung des Pfeils 6 in Figur 2; und

Fig. 7 eine Ansicht auf den Schrauber, gesehen in Richtung des Pfeils 7 in Figur 2.

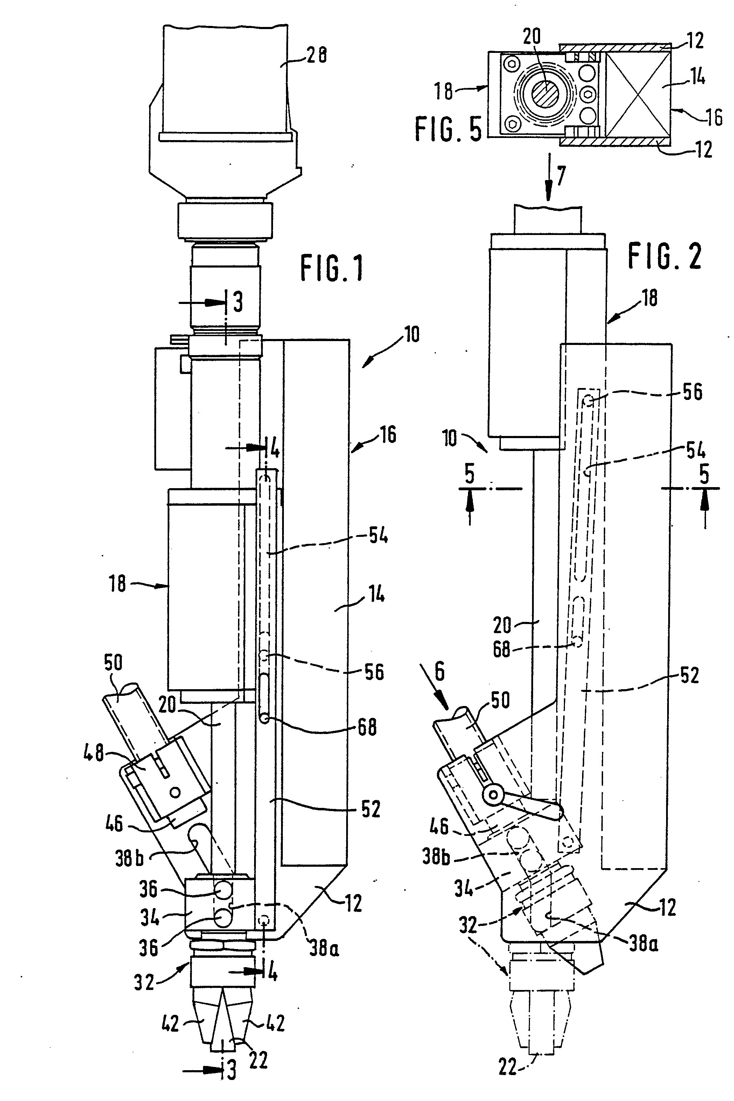

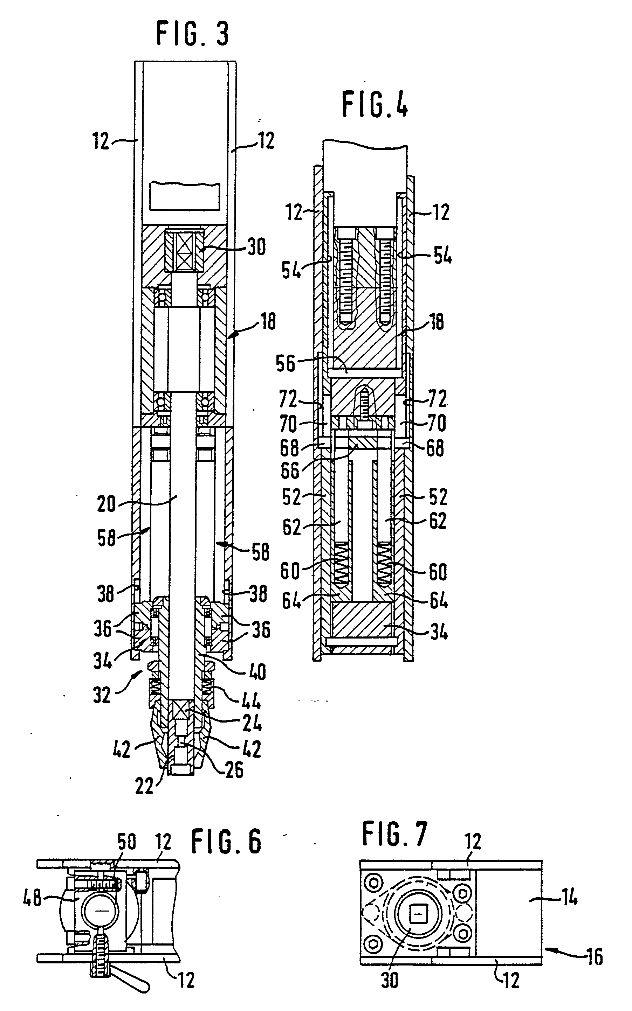

Das in den Zeichnungsfiguren gezeigte, in seiner Gesamtheit mit 10 bezeichnete Ausführungsbeispiel des erfindungsgemäßen Schraubers weist zwei voneinander beabstandete seitliche langgestreckte Halterungsplatten 12 auf, von denen in Figur 1 die betrachterzugewandte vordere Halterungsplatte abgenommen ist, um die im Zwischenraum zwischen ihnen angeordneten Baugruppen sichtbar zu machen. In Figur 2 ist diese Halterungsplatte 12 dagegen - wie auch in den übrigen Zeichnungsfiguren - dargestellt. Zwischen den Halterungsplatten 12 ist das in seiner Breite entsprechend dem lichten Abstand zwischen den Halterungsplatten 12 bemessene Gehäuse 14 einer als pneumatische Kolben-Zylinder-Einheit ausgebildeten Vorschubeinheit 16 eingesetzt, und zwar in der in Figur 1 und 2 gezeigten senkrechten Lage bündig mit den hinteren senkrechten Rändern der Halterungsplatten 12. Der in den Zeichnungsfiguren nicht gezeigte, in den Zwischenraum zwischen die Halterungsplatten 12 vortretende und durch Druckluftbeaufschlagung der Vorschub-Einheit 16 in Auf- bzw. Abwärtsrichtung verschiebbare, mit dem Kolben bzw. der Kolbenstange der Vorschub-Einheit gekoppelte Mitnehmer ist mit einem Lagerschlitten 18 verbunden, der also - je nach Druckluftbeaufschlagung - um den Hub der Vorschub-Einheit in senkrechter Richtung verschieblich ist. In Figur 1 ist die untere und in Figur 2 die obere Endstellung dieses Lagerschlittens 18 gezeigt. Im Lagerschlitten 18 ist eine Welle 20 drehbar, in Längsrichtung jedoch - in bezug auf den Lagerschlitten selbst - unverschieblich gelagert, die aus der Unterseite des Lagerschlittens 18 vortritt und auf deren freiem unteren Ende eine Schraubenkopf-Aufnahme 22 drehfest aufgesetzt ist. Wenn angenommen wird, daß die mit dem Schrauber 10 zu verarbeitenden Schrauben den üblichen Sechskantkopf aufweisen, weist die Schraubenkopf-Aufnahme 22 dann in ihrer freien Stirnfläche eine die Schraubenköpfe der zu verarbeitenden Schrauben komplementär passend aufnehmende Vertiefung auf. In Figur 3 ist erkennbar, daß die Schraubenkopf-Aufnahme auf einem auf der Stirnfläche der Welle 20 angeformten Vierkantkopf 24 drehfest aufgesetzt und durch eine versenkte Befestigungsschraube 26 mit der Welle 20 verschraubt ist. Die Schraubenkopf-Aufnahme 22 ist also im Bedarfsfall nach Lösen der Befestigungsschraube 26 von der Welle 20 abnehmbar und durch eine Schraubenkopf-Aufnahme 22 für einen anderen Schraubentyp oder eine andere Schraubengröße ersetzbar.

Die Welle 20 wird durch einen in Figur 1 strichpunktiert angedeuteten, auf dem Lagerschlitten 18 aufgesetzten Elektromotor 28 angetrieben, wofür die Welle des Elektromotors mit dem oberen Ende der Welle drehfest gekoppelt wird. Dies kann beispielsweise in der in Figur 3 angedeuteten Weise durch eine die jeweils mit einem Vierkantkopf versehene Enden der Welle 20 bzw. der Abtriebswelle des Elektromotors aufnehmende Kupplungshülse 30 erfolgen, deren Mittelöffnung komplementär zur Querschnittsform der Vierkantköpfe ausgebildet ist. Die Art und Weise dieser Koppelung sowie die - erforderlichenfalls mögliche - Zwischenschaltung einer Drehmomentenkupplung, welche die Verbindung mit der Welle 20 bei Erreichen eines vorgegebenen Schrauben-Anzugsmoments bzw. einer vorgegebenen Einschraubtiefe unterbricht bzw. durchrutscht, ist nicht Teil der Erfindung, da solche in Abhängigkeit von einem vorgegebenen Drehmoment oder einer vorgegebenen Einschraubtiefe auslösende Kupplung an sich bekannt sind und ihre Anwendung somit auch beim erfindungsgemäßen Schrauber in Frage kommt.

Unterhalb des Lagerschlittens 18 ist zwischen den dort verbreiterten Halterungsplatten 12 eine Schraubenhalterung 32 angeordnet, welche einen in vorgegebener Weise zwischen den Halterungsplatten bewegbaren Halterungsschlitten 34 (Fig. 1 und 3) aufweist. Der Halterungsschlitten 34 ist an seinen, den Innenflächen der Halterungsplatten 12 zugewandten Flachseiten mit jeweils zwei voneinander beabstandeten vorstehenden Kulissenbolzen 36 versehen, welche in eine Kulissennut 38 in der Innenfläche der jeweils zugeordneten Halterungsplatte 12 eingreifen. Die Kulissennuten 38 setzen sich jeweils aus einem parallel zur Drehachse der Welle 20 verlaufenden ersten Nutabschnitt 38a und einem sich an diesen Nutabschnitt 38a anschließenden, schräg zur Wellen-Drehachse verlaufenden zweiten Nutabschnitt 38b zusammen. Wenn die Kulissenbolzen 36 beide in der untersten möglichen Stellung im Nutabschnitt 38a stehen, hat der Halterungsschlitten 34 die in Figur 1 und 3 gezeigte, mittig zur Welle 20 ausgerichtete Lage, während eine Verschiebung des Halterungsschlitten 34 derart, daß die Kulissenbolzen 36 beide in der obersten möglichen Endstellung im Nutabschnitt 38b stehen, neben der Versetzung in Aufwärtsrichtung zusätzlich eine Verschwenkung des Halterungsschlittens 34 in Richtung des Verlaufs des Nutabschnitts 38b zur Folge hat (Fig. 2). Im Halterungsschlitten 34 ist drehbar eine aus der Unterseite des Halterungsschlittens vortretende Hülse gelagert, deren lichter Innendurchmesser größer als der Durchmesser der Welle 20 bzw. der an deren vorderen Stirnfläche befestigten Schraubenkopf-Aufnahme 22 ist. Am vortretenden Ende der Hülse 40 sind zwei Halterungsbacken 42 radial verschwenkbar angelenkt, die von einer Feder 44 normalerweise in eine radial einwärts geschwenkte Stellung vorgespannt sind, in welche der Kopf einer mit dem Gewinde schaft vorausweisend durch die Hülse eingeführten Schraube von den Backen gehalten wird, während diese Backen andererseits beim Hindurchschieben des mit der Schraubenkopf-Aufnahme 22 versehenen Vorderrendes der Welle 20 durch die Hülse 40 radial auseinandergedrängt werden, nachdem sich die in der Schraubenkopf-Aufnahme 22 vorgesehene Ausnehmung über den Kopf der Schraube geschoben hat.

Wenn die Kulissenbolzen 36 des Halterungsschlittens 34 im oberen schrägen Nutabschnitt 38b stehen, ist die Hülse 40 in dichter Anlage an einem Austrittsstutzen 46 eines zwischen den Halterungsplatten 12 eingesetzten durchbohrten Halterungsblocks 48 angedrückt. Auf der dem Austrittsstutzen 46 gegenüberliegenden Seite ist am Halterungsblock 48 das Ende einer Förderleitung 50 angeschlossen, über welche die mit dem Schrauber 10 zu verarbeitenden Schrauben einzeln aufeinanderfolgend durch Druckluft zugeführt werden. Dabei treten die Schrauben mit dem Gewindebolzen vorausweisend durch die hohle Hülse hindurch, bis der hinten liegende Kopf zwischen den Halterungsbacken 42 festgehalten wird. Wenn die Schraubenhalterung 32 dann durch Verschiebung des Halterungsschlittens 34 derart, daß dessen Kulissenbolzen 36 im unteren Nutabschnitt 38a stehen, in die untere Endstellung verschoben wird, ist die Hülse 40 zur Welle 20 bzw. der an dieser Welle vorgesehenen Schraubenkopf-Aufnahme 22 fluchtend ausgerichtet. Bei einer Verschiebung des Lagerschlittens 18 in Abwärtsrichtung wird dann also die Schraubenkopf-Aufnahme 22 durch die Hülse hindurch zwischen die Halterungsbacken 42 geschoben und - nach Aufnahme des Kopfs der zwischen den Halterungsbacken 42 gehaltenen Schraube - noch etwas aus den Backen vorgeschoben. Nachdem die Schraubenkopf-Aufnahme 22 über die Welle 20 vom Elektromotor 28 drehangetrieben wird, kann also der Gewindeschaft der in der Schraubenkopf-Aufnahme 22 gehaltenen Gewindeschraube in die vorgesehene Gewindebohrung in einem Werkstück eingedreht werden.

Aus den vorstehenden Erläuterungen des Aufbaus des Schraubers 10 ergibt sich bereits, daß beim Zuführen einer anschließend mit dem Schrauber einzuschraubenden Schraube die Schraubenhalterung 32 in die schräg geneigte Anschlußstellung an den Austrittsstutzen 46 der Förderleitung 50 herangeschoben sein muß, was voraussetzt, daß die Welle 20 mitsamt der Schraubenkopf-Aufnahme 22 vollständig aus der Schraubenhalterung 32 zurückgezogen ist. Bevor die Schraubenkopf-Aufnahme 22 dann durch die Hülse 40 zwischen die Halterungsbacken 42 der Schraubenhalterung 32 hindurchgeschoben werden kann, muß die Schraubenhalterung 32 wieder in die untere, zur Welle 20 fluchtende Stellung zurückgeführt sein. Eine zwangsläufige Koppelung der Schraubenhalterung 32 mit dem Lagerschlitten 18 derart, daß die vorstehend angegebene Bedingung erfüllt ist, wird durch zwei Koppelungsstangen 52 bewirkt, deren untere Enden zu den Kulissenbolzen 36 versetzt verschwenkbar am Halterungsschlitten 34 angelenkt sind, während ihre oberen Enden am Lagerschlitten 18 angeschlossen sind. Dieser Anschluß der Koppelungsstangen 52 am Lagerschlitten 18 erfolgt in spezieller Weise derart, daß die Bewegung des Schlittens 18 über die Koppelungsstangen 52 erst dann auf den Halterungsschlitten 34 und somit die Schraubenhalterung 32 übertragen wird, wenn die Welle 20 mit der Schraubenkopf-Aufnahme 22 bereits vollständig aus der Schraubenhalterung 32 zurückgezogen ist. Das bedeutet also, daß die oberen Enden der Koppelungsstangen 52 nicht nur verschwenkbar, sondern zusätzlich auch längsverschieblich am Lagerschlitten 18 angeschlossen sein müssen, wofür im oberen Endbereich der entsprechend lang bemessen Koppelungsstangen 52 eine langgestreckte Längsnut 54 (oder ein durchgehender Längsschlitz) vorgesehen ist, in welche jeweils das freie Ende eines vom Lagerschlitten 18 vortretenden Bolzens 56 eintritt. Die Länge der Koppelungsstangen 52 sowie der Längsnut 54 ist so bemessen, daß der Bolzen 56 in der durch die Schraubenhalterung 32 hindurchgeschobenen unteren Stellung der Schraubenkopf-Aufnahme 22 am unteren Ende der Längsnut 54 steht (Fig. 1 und 4), während er am oberen Ende dieser Längsnut dann zur Anlage kommt, wenn die Schraubenkopf-Aufnahme 22 gerade aus der Hülse 40 der Schraubenhalterung zurückgezogen ist. Wenn der Lagerschlitten 18 dann weiter in Aufwärtsrichtung bewegt wird, wird die Schlittenbewegung über die Koppelungsstangen 52 auf den Halterungsschlitten 34 übertragen und dieser in der Kulissenführung 36, 38 in die am Austrittsstutzen 46 anliegende obere Endstellung geführt.

Damit die Schraubenhalterung 32 während der beginnenden Aufwärtsverschiebung des Lagerschlittens 18 zunächst in jedem Falle noch solange sicher in die untere Endstellung gedrängt ist, bis die Schraubenkopf-Aufnahme 22 aus dem oberen Ende der Hülse 40 zurückgezogen ist, sind zwei unter Druckvorspannung auf der Oberseite des Halterungsschlittens 34 abgestützte Teleskopelemente 58 vorgesehen, welche sich aus jeweils zwei langgestreckten, in Längsrichtung verschieblich ineinandergeführten und durch eine eingesetzte Druckfeder 60 in die auseinandergeschobene Stellung vorgespannten Bauelementen 62, 64 zusammensetzen. Die oberen Enden der Teleskopelemente 58 sind an einem Querhaupt 66 abgestützt, welches um eine begrenzte Wegstrecke längsverschieblich zwischen den Koppelungsstangen angeordnet ist. In der unteren Stellung des Lagerschlittens 18 liegt das Querhaupt bzw. liegen die noch vom Querhaupt etwas vortretenden Enden der Teleskopelemente 58 an der Unterseite des Lagerschlittens 18 an, so daß also auch bei einer Aufwärtsbewegung des Lagerschlittens 18 die sich dann verlängernden Teleskopelemente 58 noch auf den Halterungsschlitten 34 drücken und ihn somit in der unteren Endstellung halten. Um zu verhindern, daß die die Teleskopelemente 58 bildenden, ineinander verschieblichen Bauelemente 62, 64 durch die Vorspannung der Druckfeder 60 vollständig auseinandergeschoben werden können, ist der Verlängerungshub des Bauelments 62 relativ zum Bauelement 64 begrenzt, und zwar erfolgt diese Hubbegrenzung dadurch, daß vom Querhaupt 66 jeweils ein Bolzen 68 in einem Längsschlitz 70 in der zugeordneten Koppelungsstange 52 vorsteht, wobei die Länge der Längsschlitze 70 den Hub der Teleskopelemente bestimmt. Die freien Enden der Bolzen 68 treten noch durch die Längsschlitze 70 hindurch in jeweils einen Längsschlitz bzw. - im dargestellten Fall (Fig. 4) -jeweils eine Längsnut 72 in der Innenfläche der jeweils zugeordneten Halterungsplatte 12 ein, wobei diese Längsnuten 72 in Aufwärtsrichtung etwa doppelt so lang bzw. auch etwas länger als die Längsschlitze 70 sind. Bei der Aufwärtsverschiebung des Lagerschlittens 18 werden die freien Enden der Bolzen 68 also bis zur Anlage an die oberen Enden der Längsnuten 72 geführt. Dann ist eine weitere Aufwärtsbewegung der Bolzen 68 nicht mehr möglich, so daß dann wieder eine Spannung der Teleskopelemente erfolgt. Dies ist möglich, weil die Koppelungsstangen 52 noch um das Maß der Längsschlitze 70 in Aufwärtsrichtung weitergeschoben werden können.

Erst dann, wenn die Bolzen 68 einerseits am oberen Ende der Längsnuten 72 und andererseits am unteren Ende der Längsschlitze 70 anliegen, ist eine weitere Aufwärtsverschiebung des Lagerschlittens 18 nicht mehr möglich. Dann ist aber auch gerade der Halterungsschlitten 34 und somit die Schraubenhalterung 32 in die am Austrittsstutzen 46 der Förderleitung 50 anliegende Stellung verschwenkt, in welcher also über die Förderleitung ein Schraubenbolzen in die Schraubenhalterung 32 zugeführt werden kann.

## Ansprüche

1. Schrauber zum Eindrehen von Kopfschrauben in Gewindebohrungen in auf einer Montagestrecke zugeführten Werkstücken, dem die einzudrehenden Schrauben mit dem Schaft vorausweisend über eine pneumatische Förderleitung von einem Schraubenvorrat aus einzeln zugeführt werden, mit einer am freien Ende einer motorisch drehantreibbaren Welle angeordneten Schraubenkopf-Aufnahme, welche zwischen zwei Endstellungen entlang der Wellen-Drehachse verschiebbar ist, wobei die Aufnahme in der vorgeschobenen Endstellung eine achsparallel ausgerichtete Schraubenhalterung für die zugeführten Schrauben durchgreift, welche sie in der zurückgezogenen Endstellung vollständig freigibt, so daß die Schraubenhalterung dann in eine zur achsparallel ausgerichteten Stellung versetzte Stellung bewegbar ist, in welcher sie passend am Ende der pneumatischen Förderleitung angeschlossen ist, worauf sie nach Zufuhr einer Schraube in die zur Drehachse ausgerichtete Stellung zurückbewegbar ist, so daß die Schraubenkopf-Aufnahme dann wieder unter Ergreifen des Schraubenkopfs in die vorgeschobene Endstellung bewegbar ist,
**dadurch gekennzeichnet,**
daß die Schraubenhalterung (32) zwischen zwei gegenüberliegenden Halterungsplatten (12) aufgenommen und durch eine zwischen ihr und den Halterungsplatten (12) ausgebildete Kulissenführung (36; 38) zwischen der zur Schraubenkopf-Aufnahme (22) fluchtend ausgerichteten Stellung einerseits und der am Ende der Förderleitung (50) angeschlossenen Stellung andererseits bewegbar geführt ist, und daß an der Schraubenhalterung (32) das eine Ende wenigstens einer Koppelungsstange (52) angeschlossen ist, welche andererseits an einem die Welle (20) mit der Schraubenkopf-Aufnahme (22) drehbar lagernden und längsverschieblich zwischen den Halterungsplatten (12) führenden Lager schlitten (18) angeschlossen ist, an welchem die die Schraubenkopf-Aufnahme zwischen den beiden Endstellungen verschiebende Vorschub-Einheit (16) angeschlossen ist.

2. Schrauber nach Anspruch 1, dadurch gekennzeichnet, daß die Kulissenführung von einer Kulissennut (38) in wenigstens einer der Halterungsplatten (12) und zwei mit Abstand voneinander von der Schraubenhalterung (32) in die Kulissennut (38) vorstehenden Kulissenbolzen (36) gebildet wird.

3. Schrauber nach Anspruch 2, dadurch gekennzeichnet, daß die Kulissennut(en) (38) einen der die Schraubenhalterung (32) durchgreifenden vorgeschobenen Endstellung der Schraubenkopf-Aufnahme (22) zugeordneten, zur Wellen-Drehachse parallelen ersten Nutabschnitt (38a) und einen hieran anschließenden, der zurückgezogenen Endstellung zugeordneten, schräg zur Wellen-Drehachse verlaufenden zweiten Nutabschnitt (38b) aufweist bzw. aufweisen.

4. Schrauber nach Anspruch 2 oder 3, dadurch gekennzeichnet, daß die Schraubenhalterung (32) einen mit den Kulissenbolzen (36) versehenen Halterungsschlitten (34) und einen drehbar innerhalb des Halterungsschlittens (34) gelagerten Halterungskopf (40; 42) mit entgegen der Vorspannung einer Feder (44) in die den Kopf einer über die Förderleitung zugeführten Schraube halternde Stellung gespannten Halterungsbacken (42) aufweist, welche beim Vorschieben der Schraubenkopf-Aufnahme (22) entgegen ihrer Federvorspannung radial auseinanderdrängbar sind.

5. Schrauber nach einem der Ansprüche 1 bis 4, dadurch gekennzeichnet, daß ein Ende der Koppelungsstange(n) (52) verschwenkbar an der Schraubenhalterung (32) und das jeweils andere Ende verschwenkbar und zusätzlich zumindest um die zum vollständigen Zurückziehen der Schraubenkopf-Aufnahme (22) aus der Schraubenhalterung (32) erforderliche Wegstrecke relativ zum Lagerschlitten (18) längsverschieblich am Lagerschlitten (18) angeschlossen ist.

6. Schrauber nach Anspruch 5, dadurch gekennzeichnet, daß ein in der ganz vorgeschobenen Endstellung und zumindest während eines ersten Teils des Wegs des Lagerschlittens (18) aus der ganz vorgeschobenen in die ganz zurückgezogene Endstellung am Lagerschlitten (18) einerseits und am Halterungsschlitten (34) andererseits angreifende, unter Druckvorspannung stehende und die Schlitten (18; 34) auseinanderzudrängen suchende Vorspanneinrichtung (58) vorgesehen ist.

7. Schrauber nach Anspruch 5 oder 6, dadurch gekennzeichnet, daß in dem am Lagerschlitten (18) angeschlossenen Endbereich der Koppelungsstange(n) (52) jeweils ein Längsschlitz (54) vorgesehen ist, in welche(n) jeweils das freie Ende eines vom Lagerschlitten (18) vortretenden Bolzens (56) eingreift bzw. eingreifen.

8. Schrauber nach Anspruch 6 oder 7, dadurch gekennzeichnet, daß die Vorspanneinrichtung wenigstens ein von langgestreckten, in Längsrichtung verschieblich ineinandergeführten und durch eine Feder (60) in eine auseinandergeschobene Stellung vorgespannten Bauelementen (62; 64) gebildetes Teleskopelement (58) aufweist.

9. Schrauber nach Anspruch 8, dadurch gekennzeichnet, daß das eine Ende des Teleskopelements bzw. der Teleskopelemente (58) dauernd am Halterungsschlitten (34) abgestützt ist bzw. sind, während das jeweils andere, demgegenüber in die auseinandergezogene Stellung vorgespannte Ende des Teleskopelements (58) zusätzlich zum Lagerschlitten (18) an einem Querhaupt (66) abgestützt ist, welches um eine begrenzte Wegstrecke längsverschieblich zwischen den Koppelungsstangen (52) angeordnet ist.

10. Schrauber nach Anspruch 9, dadurch gekennzeichnet, daß in wenigstens einer der Koppelungsstangen (52) ein Längsschlitz (70) vorgesehen ist, in welche ein vor der zugewandten Fläche des Querhaupts (66) vortretender Bolzen (68) eingreift, und daß die Länge des Längsschlitzes (70) gleich dem maximal zulässigen Hub des Teleskopelements (58) bemessen ist.

11. Schrauber nach Anspruch 10, dadurch gekennzeichnet, daß der bzw. die vom Querhaupt (66) vortretende(n) Bolzen (68) den Längsschlitz (70) in der jeweils zugeordneten Koppelungsstange (52) durchsetzt und in einen etwa doppelt so langen bzw. etwas längeren Längsschlitz (72) in der benachbarten Halterungsplatte (12) eingreift.

12. Schrauber nach Anspruch 1, dadurch gekennzeichnet, daß die Vorschub-Einheit eine am Lagerschlitten (18) angeschlossene und direkt oder indirekt an wenigstens einer der Halterungsplatten (12) andererseits abgestützte, mit einem Druckmedium beaufschlagbare Kolben-Zylinder-Einheit (14) ist.

13. Schrauber nach Anspruch 12, dadurch gekennzeichnet, daß die Kolben-Zylinder-Einheit (14) eine pneumatische Kolben-Zylinder-Einheit ist.

FIG.1

FIG.2

FIG.5

# FIG. 3

# FIG. 4

# FIG. 6

# FIG. 7

| | **EINSCHLÄGIGE DOKUMENTE** | | EP 89102056.2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - A1 - 2 543 900</u> (DIXAN BABETTE) <br> * Anspruch 1; Seite 15, Absatz 2; Seite 17, Absatz 2, Zeilen 1-4; Fig. 2,11,12, 15 * | 1,2,3, 4,5,6, 9,12, 13 | B 25 B 23/04 |
| A | <u>DE - A1 - 2 541 046</u> (FEINWERKBAU HELFER & CO. KG) <br> * Fig. 1,3; Anpruch 1 * | 3,6,8 | |

RECHERCHIERTE
SACHGEBIETE (Int. Cl.4)

B 23 P 19/00
B 25 B 23/00

Der vorliegende Recherchenbericht wurde für alle Patentansprüche erstellt.

| Recherchenort | Abschlußdatum der Recherche | Prüfer |
|---|---|---|
| WIEN | 29-05-1989 | BENCZE |